Europäisches Patentamt

European Patent Office

Office européen des brevets

(11) Veröffentlichungsnummer: **0 123 272**
A2

(12) # EUROPÄISCHE PATENTANMELDUNG

(21) Anmeldenummer: **84104400.1**

(51) Int. Cl.³: **A 23 L 2/38**

(22) Anmeldetag: **18.04.84**

(30) Priorität: **21.04.83 DE 3314428**

(43) Veröffentlichungstag der Anmeldung:
**31.10.84 Patentblatt 84/44**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Scharf, Udo, Dr.**
**Altenhainer Strasse 20**
**D-6233 Kelkheim (Taunus)(DE)**

(72) Erfinder: **Schlingmann, Merten, Dr.**
**Schneidhainer Strasse 32a**
**D-6240 Königstein/Taunus(DE)**

(72) Erfinder: **Oezkan, Erol**
**Von-der-Tann-Strasse 34**
**D-4600 Dortmund 1(DE)**

(54) **Protein-angereicherte Getränke.**

(57) Unterwirft man einen mikrobiellen Eiweißstoff einer Extraktionsbehandlung zur Verminderung seines Nukleinsäure-und Lipidgehalts und anschließend einer enzymatischen Hydrolyse durch eine oder mehrere Endoproteasen und trennt den wasserlöslichen Anteil in einem Membrantrennverfahren ab, so erhält man ein Protein-Hydrolysat, das sich zur Proteinanreicherung von Getränken eignet. Wegen der guten Löslichkeit im neutralen bis sauren Bereich können mit diesem Hydrolysat auch Instant-Getränkepulver, beispielsweise Fruchtgetränke, hergestellt werden, wobei das Protein-Hydrolysat nicht nur die physiologische Ausgewogenheit, sondern auch den Geschmack des Getränks verbessert.

EP 0 123 272 A2

**Protein-angereicherte Getränke**

Die Erfindung betrifft Getränke, die durch einen Gehalt an einem gut löslichen funktionellen Hydrolysat aus einem mikrobiellen Eiweiß gekennzeichnet sind.

Aus der deutschen Offenlegungsschrift 26 51 464 und aus der deutschen Patentschrift 27 45 954 sind bereits mikrobielle Proteine enthaltende Nahrungsmittel bekannt, darunter auch Zusätze für verschiedenartige Getränke. Bei den Nahrungsmitteln gemäß der deutschen Offenlegungsschrift 26 51 464 kann der Proteinanteil zu etwa 50 bis 100 Gew.-% aus einem mikrobiellen Protein, dessen Natrium-, Calcium- oder Magnesiumsalzen, acetylierten mikrobiellen Proteinen, Phosphat-Komplexen, Hitze-denaturierten mikrobiellen Proteinen oder Gemischen aus mikrobiellem Protein und Molkenpulver bestehen. Das gemäß der deutschen Patentschrift 27 45 954 eingesetzte funktionelle Protein wird dadurch hergestellt, daß ein ungereinigtes natürliches Protein der Gruppe Molkeprotein, mikrobielles Protein und pfanzliches Protein einer Temperatur von etwa 40 bis 150°C im wäßrigen Medium bis zu erheblicher Proteinfällung ausgesetzt, das ausgefällte Protein von dem Medium abgetrennt und mit proteolytischen Enzymen abgebaut wird.

Da mikrobielle Proteine, insbesondere Bakterienproteine, erhebliche Mengen an Nukleinsäuren enthalten können, ist deren Einsatz als Eiweißkomponente für Nahrungsmittel nicht möglich. Die erfindungsgemäßen Getränke enthalten deshalb ein funktionelles Hydrolysat, das erhältlich ist durch eine Extraktionsbehandlung eines mikrobiellen Eiweißstoffs zur Verminderung seines Nukleinsäure- und Lipidgehaltes und das dann einer enzymatischen Hydrolyse durch eine oder mehrere Endoproteasen unterworfen wird. Solche Verfahren sind in der deutschen Offenlegungsschrift 31 43 947 vorgeschlagen. Als Endoproteasen kommen Alkalase, Corolase, Trypsin und

α-Chymotrypsin sowie Mischungen dieser Enzyme in Betracht. Besonders bevorzugt ist Trypsin. Temperatur und pH-Wert sowie das Enzym-Substrat-Verhältnis richten sich nach dem jeweils eingesetzen Enzym; diese Bedingungen sind an sich bekannt. Im allgemeinen wird die Temperatur bei der Proteolyse konstant gehalten und der sich in den sauren Bereich verschiebende pH-Wert durch Zugabe einer geeigneten Base, im allgemeinen verdünnter Natronlauge, konstant gehalten. Wenn der erwünschte Abbau erfolgt ist, wird das Enzym inaktiviert, im allgemeinen durch Erhitzen auf Temperaturen um oder über 80°C.

Das so erhaltene Hydrolysat wird dann kontinuierlich oder absatzweise einem Membrantrennverfahren unterworfen, vorzugsweise einer Ultrafiltration, und das im pH-Bereich von 3 bis 7 lösliche Permeat für die erfindungsgemäßen Getränke eingesetzt. Das Retentat kann anderweitig verwendet werden, beispielsweise als Emulgator auf dem Lebensmittelsektor.

Membrantrennprozesse sind allgemein und insbesondere in der Biotechnologie geläufig (Übersichtsartikel: H. Strathmann, Chemie-Technik 11 (1982) 813 - 819). Bevorzugt für die Herstellung der erfindungsgemäß eingesetzten Produkte ist die Ultrafiltration in Platten-, Rohr-, Kapillarrohr-, Wickelmembran- und insbesondere Hohlfaserapparaten. Besonders geeignete Verfahren sind ebenfalls in der deutschen Offenlegungsschrift 31 43 947 vorgeschlagen.

Als Ausgangsmaterial kommen alle üblichen mikrobiellen Eiweißstoffe in Betracht. Bevorzugt sind Eiweißstoffe aus methylotrophen, insbesondere aus Methanol verwertenden Mikroorganismen, da Methanol eine billige, Erdöl-unabhängige Kohlenstoffquelle darstellt. Auf Grund der biologischen Sicherheit sind obligat methylotrophe Organismen besonders bevorzugt. Methanol verwertende Mirkoorganismen sind in großer Zahl bekannt und beispielsweise in den europäischen

- 3 -

0123272

Patentanmeldungen 35 831 und 37 273, in der deutschen Auslegeschrift 21 61 164 und insbesondere in der deutschen Patentschrift 26 33 451 beschrieben.

Extraktionsbehandlungen zur Verminderung des Nukleinsäure- und Lipidgehalts der mikrobiellen Zellmassen sind beispielsweise in der deutschen Patentschrift 26 33 666 beschrieben. Besonders bevorzugt ist das in dieser Patentschrift beanspruchte Verfahren, bei dem in einer ersten Stufe die Lipide mit einer Extraktionsmischung aus Ammoniak und einem niederen Alkanol, einem niederen Glykol oder aus einem Methyl- oder Ethylether eines niederen Glykols extrahiert werden, wobei diese Extraktionsmischung höchstens 30 % Wasser, bezogen auf die eingesetzte Lösemittelmenge, enthält. Das bevorzugte Lösemittel ist Methanol. Der Ammoniakgehalt liegt vorzugsweise bei 1 bis 10 %, ebenfalls bezogen auf die eingesetzte Lösemittelmenge. Hierauf erfolgt eine ein- oder mehrstufige Extraktion der Nukleinsäuren mit Wasser.

Es ist vorteilhaft, wenn die mikrobiellen Zellmassen vor diesen Extraktionsbehandlungen durch eine Hitzebehandlung bei Temperaturen von 105 bis 160°C konditioniert werden. Diese Hitzebehandlung dauert vorteilhaft 3 bis 40, insbesondere 5 bis 20, Minuten bei einer Produkt-Temperatur von 105 bis 140°C. Dieses Konditionierungsverfahren verbessert nicht nur die mechanischen Eigenschaften der mikrobiellen Rohbiomasse, was einen geringeren Proteinverlust in der folgenden Extraktion ergibt, sondern hat auch einen vorteilhaften Einfluß auf die physiologischen Eigenschaften der erhaltenen Proteine.

Die erfindungsgemäß eingesetzten Proteinhydrolysate sind in wäßrigen Systemen nicht nur im neutralen, sondern vor allem auch im sauren Bereich (pH 3) gut löslich und eignen sich deshalb auch für saure, gegebenenfalls kohlensäurehaltige Getränke. Das Proteinhydrolysat verbessert nicht nur die ernährungsphysiologische Ausgewogenheit des Getränks, sondern führt auch zu einer Geschmacksverbesserung. Der Proteingehalt im fertigen Getränk kann, abhängig von den übrigen Komponenten und von der Forderung, ob klare Löslichkeit verlangt wird, in weiten Bereichen schwanken. Er kann beispielsweise in einem sauren, klarlöslichen Fruchtgetränk 1 bis 6, vorzugsweise 1 - 3, insbesondere 1 - 2 Gew.-% betragen.

In den folgenden Beispielen wird die Erfindung näher erläutert. Prozentangaben beziehen sich hierbei auf das Gewicht.

Beispiel 1:

Herstellung des Protein-Hydrolysats

Eine Bakterienmasse aus Methylomonas clara ATCC 31 226 gemäß deutscher Patentschrift 26 33 451, Beispiel 2, wurde 30 Minuten in einem Wirbelbett bei 160°C Lufttemperatur behandelt, wobei 10 Minuten eine Produkttemperatur von 120°C eingehalten wurde. Diese thermisch nachbehandelte Zellmasse wurde dann gemäß Beispiel 1 der deutschen Patentschrift 26 33 666 mit methanolischem Ammoniak und anschließend mit Wasser extrahiert.

100 g dieses Proteinisolats wurden in 900 ml Wasser suspendiert und der pH-Wert durch Zugabe von 4 N Natronlauge auf 8,0 eingestellt. Die Suspension wird auf 45°C vorinkubiert, mit 100 mg Trypsin PTN 3.0 S (Fa. Novo) versetzt und unter Aufrechterhaltung der Temperatur und des pH-Werts 4 Stunden inkubiert. Zur Inaktivierung des Enzyms wird der Ansatz 5 Minuten auf 80°C erhitzt und die Suspension neutralisiert.

Dieses Hydrolysat wird dann einer Ultrafiltration in einem Hollow-Fiber-Ultrafiltrationssystem (Firma Amicon DC-2) mit Patronen einer Ausschlußgrenze von 100 000 Dalton (H 1 P 100) unterworfen. Das Retentat wird anderweitig verwertet; das Permeat für die erfindungsgemäßen Getränke eingesetzt.

Man kann auch nach etwa 30 Minuten Inkubationszeit den Hydrolyse-Ansatz kontinuierlich über ein Hollow-Fiber-Ultrafiltrationssystem (Firma Amicon DC-10) mit Patronen der Ausschlußgrenze 5000 Dalton (H 10 P 5) leiten, das Retentat in den Enzymreaktor zurückführen und das Flüssigkeitsvolumen mit Wasser korrigieren. Das Permeat wird gesammelt, getrocknet und für die erfindungsgemäßen Getränke verwendet.

Beispiel 2

Herstellung eines Orangen-Instant-Getränkepulvers

Die folgenden Bestandteile werden zunächst intensiv vermischt:

Komponente A:

```
 80 g Orangen-Aroma (Art. 85474, Fa. Riedel-arom, Dortmund)
324 g Zitronensäuregrieß
 48 g Carboxymethylcellulose ((R)TYLOSE CM 10456)
 48 g Trübungsmittel ((R)BEATREME 2217, Fa. Beatrice
         Foods & Co.)
500 g
```

2 g Lebensmittelfarbe Orange E 110 (Artikel 99771, Fa. Riedel-arom, Dortmund) werden in 400 ml heißem Wasser gelöst, in einer Dragiertrommel gleichmäßig auf 10 kg Zucker aufgetragen und mit Heißluft getrocknet (Komponente B).

Die Komponente A wird dann mit der Komponente B und 1 kg Protein-Hydrolysat nach Beispiel 1 intensiv gemischt. Man erhält ein orangefarbenes Getränkepulver, das in etwa der 10-fachen Gewichtsmenge Wasser leicht durch Umrühren gelöst wird.

**0123272**

In der vorstehend genannten Rezeptur kann der Anteil des Protein-Hydrolysats verdoppelt werden, wobei ebenfalls ein klar lösliches Getränk erhalten wird.

Im Vergleich zu einem Orangengetränk, das wie vorstehend, aber ohne Proteinhydrolysat hergestellt wurde, beurteilte eine sachkundige Prüfergruppe den Geschmack des erfindungsgemäßen Getränks als mehr abgerundet und angenehmer.

Patentansprüche:

1. Getränk, gekennzeichnet durch einen Gehalt an einem Protein-Hydrolysat, das erhalten wurde durch Extraktionsbehandlung eines mikrobiellen Eiweißstoffs zur Verminderung seines Nukleinsäure- und Lipidgehaltes, anschließende enzymatische Hydrolyse durch eine oder mehrere Endoproteasen und Isolierung des wasserlöslichen Anteils in einem Membrantrennverfahren.

2. Getränk nach Anspruch 1, gekennzeichnet durch ein Protein-Hydrolysat, das in einem pH-Bereich von 3 bis 7 löslich ist.

3. Getränk nach Anspruch 1 und 2 in Form eines Instant-Getränkepulvers.

4. Getränk nach Anspruch 1 bis 3, gekennzeichnet durch einen Gehalt von 1 bis 6 Gew.-% an Proteinhydrolysat.

5. Getränk nach Anspruch 1 bis 4, gekennzeichnet durch einen Gehalt von 1 bis 3 Gew.-% an Proteinhydrolysat.

6. Getränk nach Anspruch 1 bis 5, gekennzeichnet durch einen Gehalt von 1 bis 2 Gew.-% an Proteinhydrolysat.

**0123272**

Patentansprüche für Österreich:

1. Verfahren zur Herstellung eines Konzentrates für proteinangereicherte Getränke, dadurch gekennzeichnet, daß man einen mikrobiellen Eiweißstofff zur Verminderung seines Nukleinsäure- und Lipidgehaltes extrahiert, den Rückstand einer enzymatischen Hydrolyse durch eine oder mehrere Endoproteasen unterwirft, den wasserlöslichen Anteil des Hydrolysats in einem Membrantrennverfahren abtrennt und in die übrigen Bestandteile des Getränkekonzentrats einarbeitet.

2. Verfahren nach Anspruch 1, dadurch gekennzeichnet, daß man eine Hydrolysat-Fraktion einarbeitet, die in einem pH-Bereich von 3 bis 7 löslich ist.

3. Verfahren nach Anspruch 1 oder 2, dadurch gekennzeichnet, daß das fertige Konzentrat ein Instant-Getränkepulver darstellt.

4. Verfahren nach Anspruch 1 bis 3, dadurch gekennzeichnet, daß 1 bis 6 Gewichtsprozent Proteinhydrolysat eingearbeitet werden.

5. Verfahren nach Anspruch 1 bis 4, dadurch gekennzeichnet, daß 1 bis 3 Gewichtsprozent Proteinhydrolysat eingearbeitet werden.

6. Verfahren nach Anspruch 1 bis 5, dadurch gekennzeichnet, daß 1 bis 2 Gewichtsprozent Proteinhydrolysat eingearbeitet werden.